# DEMANDE DE BREVET EUROPEEN

(11) **EP 2 728 245 A1**
(43) Date de publication de la demande: **07.05.2014**
(21) Numéro de dépôt: 13191217.2
(22) Date de dépôt: 31.10.2013
(51) Int. Cl.: F21S 8/02, F21V 21/02, F21Y 101/02

(54) **Dispositif d'éclairage, destiné à être contenu dans l'ouverture d'une cloison**

(30) Priorité: 05.11.2012 FR 1260467
(71) Demandeur: Lucibel SA, 92500 Rueil Malmaison (FR)
(72) Inventeur: Houot, Jean-Laurent, 38110 Saint Clair de la Tour (FR)
(74) Mandataire: Delorme, Nicolas

(57) **Abrégé**

Ce dispositif (1) comprend un ensemble optique et un ensemble de support de l'ensemble optique dans l'ouverture de la cloison (2),
l'ensemble optique comprenant un panneau (12) pour émettre de la lumière uniformément depuis une surface (14) d'éclairage, et deux rails (16) agencés le long d'une tranche (18) du panneau (12) pour supporter un conducteur électrique,
l'ensemble de support comprenant deux organes (40) de support latéraux, comprenant chacun une portion de réception de l'un des rails (16), et une surface (42) d'appui destinée à venir en appui contre une tranche de l'ouverture de la cloison (2),
les portions de réception étant agencées entre les surfaces (42) d'appui pour que les rails (16) et le panneau (12) d'éclairage soient situés entre les surfaces (42) d'appui, la surface (14) d'éclairage étant contenue dans un volume séparant les deux surfaces (42) d'appui.

## Description

La présente invention concerne un dispositif d'éclairage, et un procédé de montage de ce dispositif d'éclairage.

Dans un bâtiment comprenant une ou plusieurs cloisons, il peut être traditionnellement apposé et fixé contre la paroi extérieure d'au moins l'une des cloisons un ou plusieurs dispositifs d'éclairage. Généralement, ces dispositifs d'éclairage se superposent à la cloison sur laquelle ils sont fixés, et forment parfois un plan d'éclairage en saillie par rapport à la paroi extérieure de la cloison, l'électronique d'alimentation pouvant être agencée de façon encombrante entre ce plan d'éclairage et la paroi extérieure de la cloison. Parfois, les moyens d'éclairage placés les uns à côté des autres forment une contre-cloison recouvrant entièrement la cloison qui les supporte.

Cependant, ce décalage entre la paroi extérieure de la cloison et le plan d'éclairage des moyens d'éclairage traditionnels, parfois imputable à l'agencement de l'électronique d'alimentation, présente quelques inconvénients, par exemple en termes d'encombrement, dans la mesure où les dispositifs d'éclairage traditionnels occupent un volume supplémentaire restreignant l'espace disponible à l'intérieur d'une pièce. De plus, le fait que les moyens d'éclairage soient agencés en saillie par rapport à la cloison augmente les risques de chocs, qui peuvent endommager les moyens d'éclairage.

Aussi la présente invention vise à pallier tout ou partie de ces inconvénients en proposant un dispositif d'éclairage offrant la possibilité d'être intégré dans le volume d'une cloison, c'est-à-dire sans faire saillie hors du volume de cette cloison, tout en étant d'un montage aisé à l'intérieur de cette cloison.

A cet effet, la présente invention a pour objet un dispositif d'éclairage, destiné à être contenu dans son intégralité dans une cloison comprenant une ouverture, le dispositif d'éclairage comprenant un ensemble optique et un ensemble de support destiné à supporter l'ensemble optique dans l'ouverture de la cloison,
l'ensemble optique comprenant un panneau d'éclairage surfacique, sensiblement parallélépipédique, destiné à émettre de la lumière uniformément depuis une surface d'éclairage sensiblement plane, et deux rails latéraux agencés chacun le long d'une tranche longitudinale du panneau d'éclairage pour supporter un conducteur électrique,
l'ensemble de support comprenant deux organes de support latéraux, comprenant chacun une portion de réception de l'un des rails latéraux de l'ensemble optique, et une surface d'appui destinée à venir en appui contre une tranche de l'ouverture de la cloison,
dans lequel les portions de réception des organes de support latéraux sont agencées entre les surfaces d'appui pour que les rails de l'ensemble optique, et conséquemment le panneau d'éclairage situé entre les rails, soient situés entre les surfaces d'appui, la surface d'éclairage étant contenue dans un volume séparant les deux surfaces d'appui.

Ainsi, le panneau d'éclairage est nécessairement intégralement contenu dans le volume de l'ouverture de la cloison, et ne s'étend pas au-delà de la paroi avant de la cloison. Cette intégration complète du panneau d'éclairage dans la cloison évite de reproduire les inconvénients de l'état de la technique, c'est-à-dire une occupation de l'espace disponible à l'intérieur de la pièce délimitée en partie par la cloison, et un risque de collision pouvant endommager le panneau d'éclairage.

De plus, le dispositif selon l'invention offre la possibilité d'un montage particulièrement aisé dans l'ouverture d'une cloison, puisque la dissociation mécanique entre l'ensemble optique et l'ensemble de support autorise la réalisation d'une étape de fixation sur la cloison et d'une étape de montage électronique distinctes. Autrement dit, le montage du dispositif dans une cloison peut être réalisé par deux corps de métiers distincts, sans que chacun de ces corps de métier ait au cours de son intervention à faire appel à des compétences autres que celles qui lui sont normalement attribuées. Il en résulte bien entendu des économies de temps et de main d'oeuvre.

On notera que le dispositif d'éclairage selon l'invention ne forme pas en lui-même la cloison mais est intégré dans une cloison.

On notera également que la cloison correspond avantageusement à une cloison murale. Cette cloison peut être une plaque de plâtre, notamment une plaque de plâtre de type BA13. Par conséquent, la distance entre la surface d'éclairage et la face de butée peut être inférieure ou égale à 13 mm, de préférence inférieure ou égale à 12,5 mm. De plus, dans le cas d'une cloison correspondant à une plaque de plâtre de type BA13, un raccord de plâtre est prévu pour recouvrir les bords arrondis de l'ouverture de la cloison en plaques de plâtre BA13.

Selon un mode de réalisation, l'un des rails comprend un évidement longitudinal supportant une pluralité de sources lumineuses alignées dans cet évidement longitudinal pour éclairer l'une des tranches longitudinales du panneau d'éclairage.

Ainsi, les sources lumineuses éclairant tangentiellement le panneau d'éclairage, déportées en rive, permettent via cet agencement de limiter l'épaisseur globale du dispositif, pour s'assurer de son intégration complète dans l'ouverture de cloison.

De manière avantageuse, l'autre rail supporte un réflecteur agencé contre l'autre tranche longitudinale du panneau d'éclairage, en vis-à-vis des sources lumineuses.

Avantageusement, chaque rail supporte alternativement dans le sens de sa longueur un ensemble de sources lumineuses suivi d'un réflecteur, chaque ensemble de sources lumineuses de l'un des rails faisant face à un réflecteur de l'autre rail, de sorte que les réflecteurs et ensembles de sources lumineuses des deux rails présentent les uns par rapport aux autres un agencement en quinconce.

Cette caractéristique présente l'avantage de répartir l'encombrement dû au câblage électrique dans chacun des rails, et de permettre une dissipation thermique plus efficace, que dans le cas où les sources lumineuses seraient toutes supportées par le même rail et le(s) réflecteur(s) supporté(s) par l'autre rail.

Selon une possibilité, la portion de réception de l'un des organes de support latéraux comprend une rainure destinée à recevoir une nervure ménagée en saillie sur l'un des rails, et un retour sur lequel est ménagé un bossage contre lequel est destinée à venir en appui une nervure du rail afin de maintenir le rail dans la portion de réception de l'organe de support latéral.

Ainsi, la fixation du rail sur l'organe de support latéral correspond à une fixation par emboîture, sans vis, clou, ou tout autre organe de fixation qui augmenterait le temps et/ou la complexité du montage de l'ensemble optique sur l'ensemble de support.

Avantageusement, le retour comprenant le bossage est agencé de façon sensiblement parallèle à la surface d'appui et à distance de celle-ci pour former un canal d'étanchéité destiné à recevoir une patte d'un cache de protection, et un joint d'étanchéité coincé entre la patte du cache de protection et la surface d'appui, ou entre la patte du cache de protection et le retour comprenant le bossage, le cache de protection présentant une paroi extérieure convexe conformée pour minimiser le risque de d'accrochage et l'intensité de l'impact en cas de choc.

Selon un mode de réalisation, chaque organe de support latéral comprend une surface de butée, destinée à venir en appui contre une paroi arrière de la cloison pour éviter que la surface d'appui s'étende au-delà de la paroi avant de la cloison, les surfaces de butée étant distantes de la surface d'éclairage d'une distance d prédéterminée inférieure ou égale à la hauteur h de chaque surface d'appui, de sorte que le dispositif d'éclairage, notamment le panneau d'éclairage, soit intégralement contenu dans le volume de la cloison, la distance d étant inférieure ou égale à l'épaisseur de la cloison.

Par épaisseur de la cloison on entend la plus grande distance entre sa paroi avant et sa paroi arrière.

L'invention concerne aussi une cloison intégrant un dispositif d'éclairage ayant les caractéristiques précitées.

L'invention concerne enfin un procédé de montage d'un dispositif d'éclairage ayant les caractéristiques précitées dans une ouverture d'une cloison, le procédé comprenant :
- une première étape de pose de l'ensemble de support dans l'ouverture de la cloison, puis
- une deuxième étape de montage de l'ensemble optique sur l'ensemble de support.

Ainsi, le procédé selon l'invention offre la possibilité de faire du montage de l'ensemble de support, et de celui de l'ensemble optique, deux étapes de montage distinctes, exécutables par deux personnes différentes aux compétences appropriées pour chacune de ces étapes.

Selon une possibilité, la première étape de pose de l'ensemble de support comprend les étapes :
- de positionnement d'un organe de support latéral sur la cloison par mise en appui de la surface d'appui contre l'une des tranches de l'ouverture de la cloison et de la surface de butée contre la paroi arrière de la cloison, la mise en appui de chaque surface de butée contre la paroi arrière de la cloison permettant de positionner correctement chacun des organes de support latéraux contre la cloison,
- de fixation de l'organe de support latéral ainsi positionné,
- et de positionnement et de fixation d'un autre organe latéral,

la deuxième étape de montage de l'ensemble optique sur l'ensemble de support comprenant les étapes :
- d'emboîtement de l'un des rails ou des deux rails dans la ou les portions de réception correspondantes des organes de support latéraux,
- de positionnement d'un conducteur électrique, et/ou le cas échéant de sources lumineuses et/ou d'un réflecteur, à l'intérieur de l'un des rails ou à l'intérieur de chaque rail, avant ou après l'emboîtement du ou des rails sur les portions de réception correspondantes,
- de mise en place du panneau d'éclairage sur les organes de support latéraux, après l'étape positionnement d'un conducteur électrique et/ou le cas échéant de sources lumineuses et/ou d'un réflecteur à l'intérieur de l'un des rails ou à l'intérieur de chaque rail.

D'autres caractéristiques et avantages ressortiront clairement de la description ci-après d'un mode de réalisation, donné à titre d'exemple non limitatif, en référence aux dessins annexés dans lesquels :
- la figure 1 est une vue en perspective du dispositif selon un mode de réalisation de l'invention intégré dans une cloison,
- la figure 2 est une vue en coupe selon la ligne I - I de la figure 1,
- la figure 3 est une vue en perspective du dispositif d'éclairage selon un mode de réalisation de l'invention,
- la figure 4 est une en perspective d'un dispositif d'éclairage selon un mode de réalisation de l'invention, dans laquelle certaines parties ont été ôtées pour une meilleure visibilité.

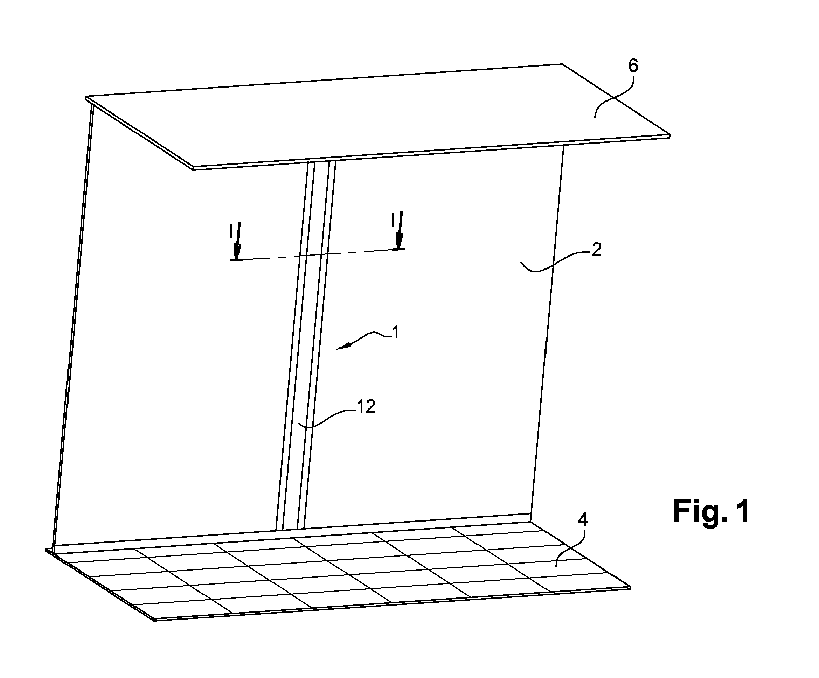

La figure 1 montre un dispositif 1 d'éclairage selon un mode de réalisation de l'invention.

Le dispositif 1 d'éclairage est destiné à être complètement intégré dans une ouverture d'une cloison 2. Comme cela apparaît sur les figures, le dispositif 1 d'éclairage ne forme pas en lui-même la cloison 2 mais est intégré dans la cloison 2. Selon l'exemple de la figure 1, le dispositif 1 d'éclairage correspond à un dispositif 1 d'éclairage mural ; la cloison 2 correspond à une cloison murale, s'étendant ici verticalement entre un plancher 4 et un plafond 6.

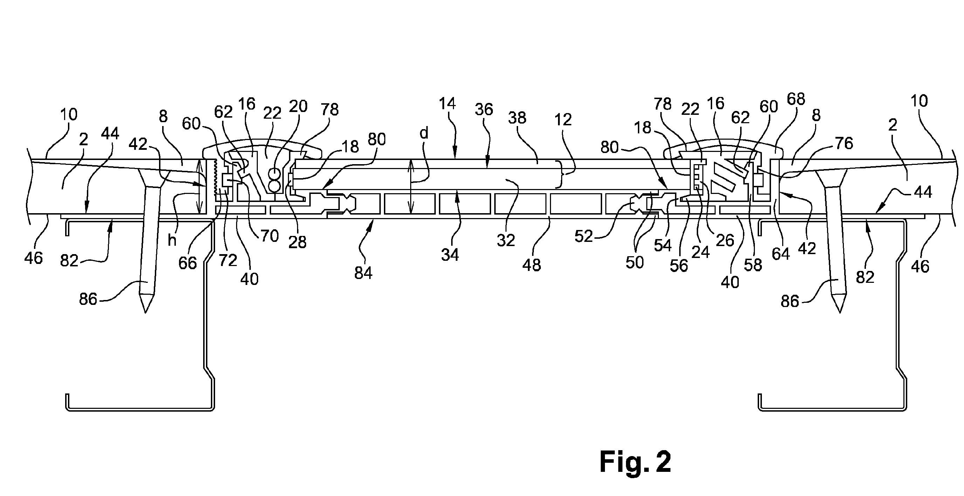

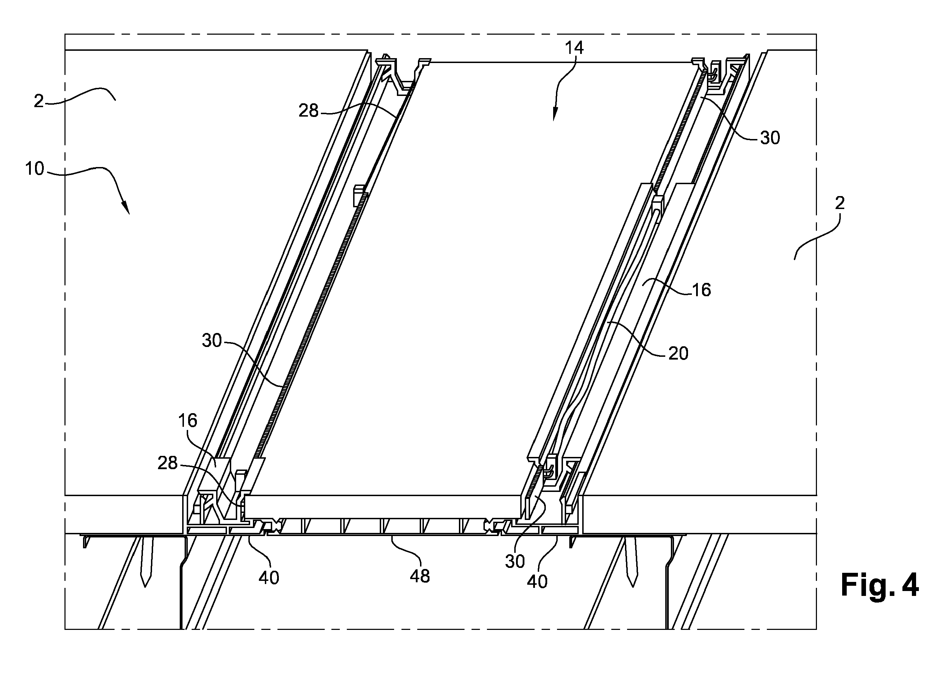

Selon les figures 1 à 4, la cloison 2 correspond à une plaque de plâtre, notamment une plaque de plâtre de type BA13. Le dispositif 1 d'éclairage, pour être contenu intégralement dans la cloison 2, présente une épaisseur inférieure à celle de la cloison 2 ; pour une cloison 2 correspondant à une plaque de plâtre de type BA13, l'épaisseur du dispositif 1 d'éclairage est donc inférieure ou égale à 13 mm et de préférence inférieure ou égale à 12,5 mm. On notera que pour une cloison 2 correspondant à une plaque de plâtre de type BA, un raccord 8 de plâtre, visible sur la figure 2, peut être prévu pour compenser la déclivité de la paroi avant 10 de la cloison 2 aux bords de l'ouverture ; les raccords 8 sont conformés pour prolonger la paroi avant 10.

Le dispositif 1 d'éclairage comprend un ensemble optique, et un ensemble de support destiné à supporter l'ensemble optique dans l'ouverture de la cloison 2.

L'ensemble optique comprend un panneau 12 d'éclairage surfacique, sensiblement parallélépipédique, destiné à émettre de la lumière uniformément depuis une surface 14 d'éclairage sensiblement plane, et deux rails 16 latéraux agencés chacun le long d'une tranche 18 longitudinale du panneau 12 d'éclairage pour supporter un conducteur électrique, par exemple un câble 20 électrique d'alimentation.

Selon le mode de réalisation illustré à la figure 2, les rails 16 comprennent un évidement 22 longitudinal supportant le cas échéant le câble 20 électrique ou une pluralité de sources 24 lumineuses alignées en rive du panneau 12 d'éclairage. Le ou les câbles 20 électriques peuvent servir à l'alimentation des sources 24 lumineuses.

On notera par ailleurs que les sources 24 lumineuses peuvent correspondre à des diodes électroluminescentes (LED selon l'acronyme anglais), supportées par un circuit imprimé 26 également appelé printed circuit board ou PCB, par exemple des LED de puissance, adaptées à une fonction d'éclairage, c'est-à-dire des LED dont la puissance peut être supérieure ou égale à 1 W.

Selon une possibilité avantageuse, l'un des rails 16 peut supporter un réflecteur 28 agencé contre l'une des tranches 18 longitudinales du panneau 12 d'éclairage, en vis-à-vis des sources 24 lumineuses supportées par l'autre rail 16, afin de refléter vers l'intérieur du panneau 12 d'éclairage la lumière émise par les sources lumineuses agencées de l'autre côté. Cela permet de limiter les pertes tout en limitant l'encombrement pouvant résulter de l'utilisation d'un nombre important de sources 24 lumineuses.

Selon le mode de réalisation préféré, visible notamment sur les figures 1 à 4, chaque rail 16 supporte en fait à la fois des ensembles 30 de sources 24 lumineuses et des réflecteurs 28 placés à la suite des ensembles de sources 24 lumineuses, de manière alternée, chaque réflecteur 28 de l'un des rails 16 faisant face à un ensemble 30 de sources 24 lumineuses de l'autre rail 16. Ainsi, les réflecteurs 28 et ensembles 30 de sources 24 lumineuses des deux rails 16 sont agencés en quinconce les uns par rapport aux autres. Par ailleurs, on notera que le ou les câbles 20 s'étendent entre deux ensembles 30 de sources lumineuses, en parallèle du réflecteur 28 supporté par le même rail 16. Cela limite l'encombrement dû au câblage électrique, et permet une dissipation thermique plus efficace.

On notera que chaque rail 16 peut être formé d'une pluralité de tronçons alignés les uns à la suite des autres, aux profils éventuellement différents suivant leur utilisation, c'est-à-dire selon que le tronçon de rail 16 supporte des sources 24 lumineuses ou un câble 20 électrique et/ou un réflecteur 28. Ainsi, les rails 16 visibles sur la figure présentent un profil distinct.

Comme cela est représenté sur la figure 2, le panneau 12 d'éclairage peut comprendre un guide 32 optique formant couche principale, dont une face 34 inférieure est recouverte d'une surface réfléchissante, et dont une face 36 supérieure est recouverte d'une couche 38 diffusante pour diffuser de façon uniforme, sur toute la surface 14 d'éclairage, la lumière émise, par exemple par les sources 24 lumineuses, cette lumière pouvant avoir été réfléchie par la surface réfléchissante et/ou, le cas échéant, le réflecteur 28 placé contre l'une des tranches 18 longitudinales.

L'ensemble de support comprend deux organes 40 de support latéraux, qui peuvent former deux pièces distinctes ou appartenir à une seule et même pièce, comprenant chacun une portion de réception de l'un des rails 16 latéraux de l'ensemble optique, une surface 42 d'appui destinée à venir en appui contre une tranche de l'ouverture de cloison 2, les surfaces 42 d'appui de chacun des organes 40 de support latéral pouvant être parallèles l'une par rapport à l'autre, et une surface 44 de butée destinée à venir en appui contre une paroi 46 arrière de la cloison pour éviter que la surface 42 d'appui s'étende au-delà de la paroi 10 avant de la cloison 10.

Les portions de réception des organes 40 de support latéraux sont agencées entre les surfaces 42 d'appui de chacun des deux organes 40 de support latéraux pour que les rails 16 de l'ensemble optique, et conséquemment le panneau 12 d'éclairage situé entre les rails 16, soient situés entre les surfaces 42 d'appui, la surface 14 d'éclairage étant intégralement contenue dans le volume (ici sensiblement parallélépipédique) séparant les deux surfaces 42 d'appui.

La surface 42 d'appui et la surface 44 de butée adjacente sont agencées en équerre l'une par rapport à l'autre pour épouser un coin de l'ouverture de la cloison 2, ce coin correspondant à l'intersection entre l'une des tranches de cette ouverture et la paroi 46 arrière de la cloison.

L'ensemble de support peut aussi comprendre un organe 48 de support central, pouvant former avec les organes 40 de support latéraux une seule et même pièce, dont chaque côté longitudinal est rattaché par des moyens d'emboiture à l'un des organes 40 de support latéraux, pour former un plan d'appui pour la face 34 inférieure du panneau 12 d'éclairage. Les moyens d'emboiture comprennent par exemple des languettes 50 flexibles à cran, formant les côtés longitudinaux de l'organe 48 de support central, entre lesquelles est destinée à venir s'emboîter une portion 52 d'emboiture de chaque organe 40 de support latéral, la portion 52 d'emboîture présentant une gorge dans laquelle s'insèrent les crans des languettes 50.

La portion de réception de chaque organe 40 de support latéral peut comprendre une rainure 54 destinée à recevoir une nervure 56 ménagée en saillie sur l'un des rails 16. Chaque portion de réception peut aussi comprendre, en complément de la rainure 54, un retour 58 sur lequel est ménagé un bossage 60 contre lequel est destiné à venir en appui une nervure 62 du rail 16 correspondant afin de maintenir ce rail 16 solidaire de l'organe 40 de support latéral qui le reçoit. Ainsi, la fixation des rails 16 sur les organes 40 de support latéraux correspondant est une fixation par emboîture, sans vis, clou, ou tout autre organe de fixation qui augmenterait le temps et/ou la complexité du montage de l'ensemble optique sur l'ensemble de support.

Avantageusement, le retour 58 comprenant le bossage 60 est agencé de façon sensiblement parallèle à la surface 42 d'appui, plus précisément à un autre retour 64 dont une face correspond à la surface 42 d'appui, et à distance de celle-ci pour former un canal d'étanchéité destiné à recevoir une patte 66 d'un cache 68 de protection, et un joint 70 d'étanchéité coincé entre la patte 66 du cache 68 de protection et la surface 42 d'appui, ou entre la patte 66 du cache 68 de protection et le retour 58 comprenant le bossage 60. Le joint 70 d'étanchéité peut être logé dans une rainure 72 ménagée sur la patte 66 du cache 68 de protection.

Le cache 68 de protection est avantageusement conformé pour recouvrir l'espace entre l'une des tranches 18 longitudinales du panneau 12 d'éclairage et l'une des surfaces 42 d'appui. Le cache 68 de protection contribue ainsi à la protection du rail 16 qu'il recouvre et donc à celle des composants électroniques ou optiques supportés par le rail 16. Le cache 68 de protection peut notamment présenter une paroi 74 extérieure convexe, par exemple à section en arc-de-cercle, pour laisser un minimum de prise en cas de choc.

La face de chaque retour 64, opposée celle formant la surface 42 d'appui, peut comprendre une pluralité de bossages 76 destinés à coopérer par complémentarité de forme avec une pluralité de bossages de la patte 66 du cache 68 de protection pour la fixation de ce dernier à l'organe 40 de support latéral correspondant. Ainsi, cette fixation est effectuée simplement et rapidement, sans utilisation de vis ou autres organes de fixation.

Chaque rail 16 peut comprendre un bec 78 de maintien agencé pour serrer le panneau 12 d'éclairage contre une surface 80 de support de chacun des organes 40 de support latéraux lorsque chaque rail 16 est mis en place sur l'organe 40 de support latéral correspondant. Ainsi, la fixation du panneau 12 d'éclairage s'affranchit de l'utilisation d'organes de fixation tels que des vis ou des clous.

Chaque cache 68 de protection peut par ailleurs comprendre une portion d'extrémité destinée à coopérer par complémentarité de forme avec le bec 78 de maintien de chaque rail 16 pour éviter un accrochage de l'un des becs 78 de maintien en cas de choc avec une personne ou un objet extérieur et une détérioration subséquente de l'un des rails 16.

Comme cela est visible sur la figure 2, les faces 82 arrière des organes de support latéraux sont alignées dans un même plan, contenant également le cas échéant la face 84 arrière de l'organe 48 de support central, ce plan étant sensiblement parallèle à la surface 14 d'éclairage.

Les surfaces 44 de butée, parallèles à la surface 14 d'éclairage, sont distantes de celle-ci d'une distance d prédéterminée inférieure ou égale à la hauteur h de chaque surface 42 d'appui, de sorte que le dispositif 1, notamment le panneau 12 d'éclairage, soit intégralement contenu dans le volume de la cloison 2, la distance d étant inférieure ou égal à l'épaisseur de la cloison 2. Par exemple, pour une cloison 2 correspondant à une plaque de plâtre de type BA13, la distance d est inférieure ou égale à 13 mm, de préférence inférieure ou égale à 12,5 mm.

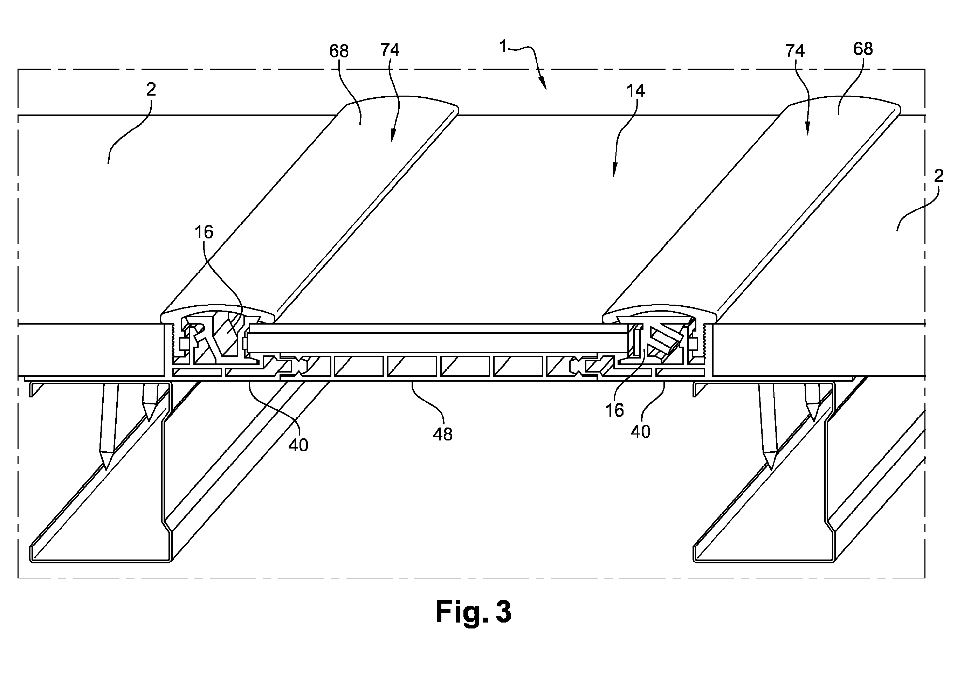

Le dispositif 1 peut comprendre, comme cela est représenté sur les figures 2 et 3, des moyens de fixation de chaque organe 40 de support latéral sur la paroi 46 arrière de la cloison 2, comme des vis ou des clous 86.

Eventuellement, comme c'est le cas sur les figures 2 et 3, ces moyens de fixation, c'est-à-dire par exemple les clous 86, peuvent coopérer avec des pièces 88 de fixation, ici en U, pour permettre le rattachement de la cloison 2 et du dispositif 1 d'éclairage à une autre cloison ou mur, éventuellement d'épaisseur plus important, la cloison 2 formant dans ce cas une contre-cloison dans laquelle est complètement intégré le dispositif 1.

Le procédé de montage du dispositif 1 d'éclairage selon l'invention dans une ouverture de la cloison 2 comprend une première étape de pose de l'ensemble de support dans l'ouverture de la cloison 2, puis une deuxième étape de montage de l'ensemble optique sur l'ensemble de support. Ainsi, le procédé selon l'invention offre la possibilité de faire du montage de l'ensemble de support, et de celui de l'ensemble optique, deux étapes de montage distinctes, exécutables par deux personnes différentes aux compétences appropriées pour chacune de ces étapes.

Plus particulièrement, la première étape de pose de l'ensemble de support peut comprendre les étapes :
- de positionnement d'un organe 40 de support latéral sur la cloison 2 par mise en appui de la surface 42 d'appui contre l'une des tranches de l'ouverture de la cloison 2 et de la surface 44 de butée contre la paroi 46 arrière de la cloison 2, la mise en appui de chaque surface 44 de butée contre la paroi 46 arrière de la cloison 2 permettant de positionner correctement chacun des organes 40 de support latéraux contre la cloison 2,
- de fixation de l'organe 40 de support latéral ainsi positionné, par exemple par l'intermédiaire des clous 86,
- éventuellement, de moulage d'un raccord 8 de plâtre sur un bord arrondi de la cloison 2, notamment lorsque la cloison 2 correspond à une plaque de plâtre à bords arrondis de type BA,
- le cas échéant, d'assemblage de l'organe 48 de support central sur l'organe 40 de support latéral,
- et de positionnement, le cas échéant d'emboîtement avec l'organe 48 de support central, et de fixation d'un autre organe 40 latéral.

La deuxième étape de montage de l'ensemble optique sur l'ensemble de support peut comprendre les étapes :
- d'emboîtement de l'un des rails 16 ou des deux rails 16 dans la ou les portions de réception correspondantes des organes 40 de support latéraux,
- de positionnement d'un conducteur électrique, et/ou le cas échéant de sources 24 lumineuses et/ou d'un réflecteur 28, à l'intérieur de l'un des rails 16 ou à l'intérieur de chaque rail 16, avant ou après l'emboîtement du ou des rails 16 sur les portions de réception correspondantes,
- de mise en place du panneau 12 d'éclairage sur les organes 40 de support latéraux, après l'étape positionnement d'un conducteur électrique et/ou le cas échéant de sources 24 lumineuses et/ou d'un réflecteur 28 à l'intérieur de l'un des rails 16 ou à l'intérieur de chaque rail 16.

On notera que les rails 16, le ou les conducteurs électriques (et éventuellement les sources 24 lumineuses et réflecteur 28) et le panneau 12 d'éclairage peuvent être assemblés ensemble, puis fixés ensuite ensemble simultanément sur l'ensemble de support, ou bien que l'un des rails 16 ou les deux rails 16 peuvent être fixés préalablement sur l'ensemble de support avant d'y monter le ou les conducteurs électriques et/ou sources 24 lumineuses et/ou réflecteur 28, le panneau 12 d'éclairage pouvant être monté avant les deux rails 16, ou après emboîtement de l'un des deux rails 16 sur l'un des organes 40 de support latéraux.

Le procédé peut comprendre une étape ultérieure de fixation d'un cache 68 de protection par-dessus chaque rail 16 pour étanchéifier et protéger la partie du dispositif 1 d'éclairage située entre l'une des tranches 18 longitudinales du panneau 12 d'éclairage et la surface 42 d'appui la plus proche de cette tranche 18 longitudinale.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans sortir pour autant du domaine de protection de l'invention.

## Revendications

1. Dispositif (1) d'éclairage, destiné à être contenu dans son intégralité dans une cloison (2) comprenant une ouverture, le dispositif (1) d'éclairage comprenant un ensemble optique et un ensemble de support destiné à supporter l'ensemble optique dans l'ouverture de la cloison (2),
l'ensemble optique comprenant un panneau (12) d'éclairage surfacique, sensiblement parallélépipédique, destiné à émettre de la lumière uniformément depuis une surface (14) d'éclairage sensiblement plane, et deux rails (16) latéraux agencés chacun le long d'une tranche (18) longitudinale du panneau (12) d'éclairage pour supporter un conducteur électrique,
l'ensemble de support comprenant deux organes (40) de support latéraux, comprenant chacun une portion de réception de l'un des rails (16) latéraux de l'ensemble optique, et une surface (42) d'appui destinée à venir en appui contre une tranche de l'ouverture de la cloison (2),
dans lequel les portions de réception des organes (40) de support latéraux sont agencées entre les surfaces (42) d'appui pour que les rails (16) de l'ensemble optique, et conséquemment le panneau (12) d'éclairage situé entre les rails (16), soient situés entre les surfaces (42) d'appui, la surface (14) d'éclairage étant contenue dans un volume séparant les deux surfaces (42) d'appui.

2. Dispositif (1) d'éclairage selon la revendication 1, **caractérisé en ce que** l'un des rails (16) comprend un évidement (22) longitudinal supportant une pluralité de sources (24) lumineuses alignées dans cet évidement (22) longitudinal pour éclairer l'une des tranches (18) longitudinales du panneau (12) d'éclairage.

3. Dispositif (1) d'éclairage selon la revendication 2, **caractérisé en ce que** l'autre rail (16) supporte un réflecteur (28) agencé contre l'autre tranche (18) longitudinale du panneau (12) d'éclairage, en vis-à-vis des sources (24) lumineuses.

4. Dispositif (1) d'éclairage selon l'une des revendications 1 à 3, **caractérisé en ce que** chaque rail (16) supporte alternativement dans le sens de sa longueur un ensemble (30) de sources (24) lumineuses suivi d'un réflecteur (28), chaque ensemble (30) de sources (24) lumineuses de l'un des rails (16) faisant face à un réflecteur (28) de l'autre rail (16), de sorte que les réflecteurs (28) et ensembles (30) de sources (24) lumineuses des deux rails (16) présentent les uns par rapport aux autres un agencement en quinconce.

5. Dispositif (1) d'éclairage selon l'une des revendications 1 à 4, **caractérisé en ce que** la portion de réception de l'un des organes (40) de support latéraux comprend une rainure (54) destinée à recevoir une nervure (56) ménagée en saillie sur l'un des rails (16), et un retour (58) sur lequel est ménagé un bossage (60) contre lequel est destinée à venir en appui une nervure (62) du rail (16) afin de maintenir le rail (16) dans la portion de réception de l'organe (40) de support latéral.

6. Dispositif (1) d'éclairage selon la revendication 5, **caractérisé en ce que** le retour (58) comprenant le bossage (60) est agencé de façon sensiblement parallèle à la surface (42) d'appui et à distance de celle-ci pour former un canal d'étanchéité destiné à recevoir une patte (66) d'un cache (68) de protection, et un joint (70) d'étanchéité coincé entre la patte (66) du cache (68) de protection et la surface (42) d'appui, ou entre la patte (66) du cache (68) de protection et le retour (58) comprenant le bossage (60), le cache (68) de protection présentant une paroi (74) extérieure convexe conformée pour minimiser le risque de d'accrochage et l'intensité de l'impact en cas de choc.

7. Dispositif (1) d'éclairage selon l'une des revendications 1 à 6, **caractérisé en ce que** chaque organe (40) de support latéral comprend une surface (44) de butée, destinée à venir en appui contre une paroi (46) arrière de la cloison (2) pour éviter que la surface (42) d'appui s'étende au-delà de la paroi (10) avant de la cloison (2), les surfaces (44) de butée étant distantes de la surface (14) d'éclairage d'une distance d prédéterminée inférieure ou égale à la hauteur h de chaque surface (42) d'appui, de sorte que le dispositif (1) d'éclairage, notamment le panneau (12) d'éclairage, soit intégralement contenu dans le volume de la cloison (2), la distance d étant inférieure ou égale à l'épaisseur de la cloison (2).

8. Cloison intégrant un dispositif (1) d'éclairage selon l'une des revendications 1 à 7.

9. Procédé de montage d'un dispositif (1) d'éclairage selon l'une des revendications 1 à 8, dans une ouverture d'une cloison (2), le procédé comprenant :
- une première étape de pose de l'ensemble de support dans l'ouverture de la cloison (2), puis
- une deuxième étape de montage de l'ensemble optique sur l'ensemble de support.

10. Procédé selon la revendication 9, **caractérisé en ce que** la première étape de pose de l'ensemble de support comprend les étapes :
- de positionnement d'un organe (40) de support latéral sur la cloison (2) par mise en appui de la surface (42) d'appui contre l'une des tranches de l'ouverture de la cloison (2) et de la surface (44) de butée contre la paroi (46) arrière de la cloison (2), la mise en appui de chaque surface (44) de butée contre la paroi (46) arrière de la cloison (2) permettant de positionner correctement chacun des organes (40) de support latéraux contre la cloison (2),
- de fixation de l'organe (40) de support latéral ainsi positionné,
- et de positionnement et de fixation d'un autre organe (40) latéral,
la deuxième étape de montage de l'ensemble optique sur l'ensemble de support comprenant les étapes :
- d'emboîtement de l'un des rails (16) ou des deux rails (16) dans la ou les portions de réception correspondantes des organes (40) de support latéraux,
- de positionnement d'un conducteur électrique, et/ou le cas échéant de sources (24) lumineuses et/ou d'un réflecteur (28), à l'intérieur de l'un des rails (16) ou à l'intérieur de chaque rail (16), avant ou après l'emboîtement du ou des rails (16) sur les portions de réception correspondantes,
- de mise en place du panneau (12) d'éclairage sur les organes (40) de support latéraux, après l'étape positionnement d'un conducteur électrique et/ou le cas échéant de sources (24) lumineuses et/ou d'un réflecteur (28) à l'intérieur de l'un des rails (16) ou à l'intérieur de chaque rail (16).
